# EUROPEAN PATENT SPECIFICATION

(11) **EP 1 790 583 B1**
(45) Date of publication and mention of the grant of the patent: **10.04.2013**
(21) Application number: 05772550.9
(22) Date of filing: 10.08.2005
(51) Int. Cl.: B65D 41/04, B65D 41/34, B65D 51/20, B65D 65/46

(54) **BIODEGRADABLE CAP HAVING EXCELLENT UNCAPPING PROPERTIES AND VESSEL WITH BIODEGRADABLE CAP**
BIOLOGISCH ABBAUBARE KAPPE MIT AUSGEZEICHNETEN ABNAHMEEIGENSCHAFTEN UND GEFÄSS MIT BIOLOGISCH ABBAUBARER KAPPE
BOUCHON BIODÉGRADABLE AYANT D'EXCELLENTES PROPRIÉTÉS DE DÉBOUCHAGE ET RÉCIPIENT AVEC BOUCHON BIODÉGRADABLE

(30) Priority: 11.08.2004 JP 2004234103
(43) Date of publication of application: 30.05.2007
(73) Proprietor: Toyo Seikan Kaisha, Ltd., Shinagawa-ku Tokyo 141-8640 (JP); JAPAN CROWN CORK CO., LTD., Tokyo 100-8522 (JP)
(72) Inventor: ITOH, Takurou, c/o Toyo Seikan Kaisha, Ltd., Yokohama-shi, Kanagawa 230-0001 (JP); HAYASHI, Hiroaki, c/o Toyo Seikan Kaisha, Ltd., Yokohama-shi, Kanagawa 230-0001 (JP); ISHII, Osamu, c/o Japan Crown Cork Co., Ltd., Hiratsuka-shi, Kanagawa 254-0021 (JP); HASHIMOTO, Katsumi, c/o Japan Crown Cork Co., Ltd, Hiratsuka-shi, Kanagawa 254-0021 (JP)
(74) Representative: Manley, Nicholas Michael
(86) International application number: PCT/JP2005/014962
(87) International publication number: WO 2006/016703

(56) References cited:
- EP-A- 0 816 248
- EP-A- 1 327 663
- JP-A- 11 198 957
- JP-A- 2001 031 131
- JP-A- 2001 199 460
- JP-A- 2003 063 550
- JP-A- 2003 301 096
- JP-A- 2003 301 096
- JP-A- 2004 506 792
- US-A- 4 938 390

## Description

### Technical Field

The present invention relates to a cap having biodegrading property. More specifically, the invention relates to a cap which effectively prevents the generation of powder that stems from a biodegradable resin at the time of the opening/closing operation, and has biodegrading property enabling the cap to be excellently opened, sealed and formed, and to a container with a biodegradable cap using the above cap.

### Background Art

As an ideal method of solving the problems of plastic wastes, attention has been given to degradable plastics that disintegrate in a natural environment. Among them, biodegradable plastics that disintegrate by the action of enzymes released by the bacteria and true fungi have heretofore been used in the field of packing containers.

However, though the biodegradable plastics have excellent biodegrading properties in harmony with the environment, there still remain problems that must be solved in really placing them in the practical use for forming plastic articles.

For example, there are a wide variety of biodegradable resins ranging from hard aliphatic polyester resins up to soft aliphatic polyester resins. Particularly, a resin prepared from an environmentally friendly plant materials is hard as represented by polylactic acid. For the use such as resin caps, however, the hard resin must be imparted with more flexibility, cushioning property and rubbery elasticity, and limitation is imposed on its use.

Various proposals have been made for imparting flexibility to the plastics. For example, JP-A-2000-19185 is proposing a polylactic acid composition of a mixture of a polymer (A) comprising lactic acid as a chief component and an aliphatic polyester (B) comprising an aliphatic dicarboxylic acid and a chain-like molecular diol as chief components. This patent document teaches an advantage of imparting flexibility without impairing biodegrading property accompanied, however, by such problems as insufficient viscoelasticity that is achieved and insufficient property as the resin.

Reference is also made to JP-A-2003-301096, which discloses a cap according to the preamble of claim 1, namely a cap having a biodegradable resin composition comprising a soft biodegradable polyester resin and a hard biodegradable aliphatic polyester resin as well as a lid member comprising the above resin composition. The articles formed by using the above resin composition exhibit biodegrading property as well as excellent flexibility and shock resistance.

### Disclosure of the Invention

However, if a highly flexible lid member as taught by the above prior art is used for a container made of a hard aliphatic polyester resin such as polylactic acid having a very high rigidity, the surface of the cap member is abraded at the time of the opening/closing operation due to friction that occurs between the mouth portion of the container and the inner surface of the cap, and a resin powder generates.

It is therefore an object of the present invention to provide a cap having biodegrading property obtained by using only a resin having biodegrading property, which effectively prevents the generation of resin powder at the time of the opening/closing operation even when the cap is used for a container made of a rigid biodegradable resin such as of polylactic acid and, further, exhibits very excellent sealing and formability.

Another object of the present invention is to provide a container with cap, wherein both the container and the cap have biodegrading property and are environmentally friendly.

According to the present invention, there is provided a cap having biodegrading property comprising a cap shell including a top panel and a skirt portion, and a liner member applied to the inner surface of the top panel of the cap shell, wherein the cap shell is made of a resin composition of a hard aliphatic polyester resin (A) and a soft aliphatic polyester resin (B) which are blended at a weight ratio of A:B = 20:80 to 80:20, characterised in that the liner member (i) comprises a laminate of a base member of a resin layer of a soft aliphatic polyester resin positioned on the inner surface of the top panel of the cap shell and a surface layer of a hard aliphatic polyester resin on the surface that comes in contact with the mouth portion of the container, or (ii) comprises a resin composition of a polylactic acid resin (C) and a polybutylene terephthalate adipate resin (D) blended at a weight ratio of C:D = 60:40.

In the cap of the invention, it is desired that:
1. The hard aliphatic polyester resin (A) is a polylactic acid;
2. The soft aliphatic polyester resin (B) is a polybutylene succinate;
3. The liner member comprises a foamed material of a biodegradable resin;
4. The liner member has a layer of a biodegradable gas-barrier resin;
5. The liner member has an inner ring; and
6. A tamper-evident band is formed at the lower end of the cap shell.

According to the invention, further, there is provided a container with cap, wherein the cap is applied to a container made of a hard biodegradable polyester resin.

In the container with cap of the invention, it is desired that the container is heat-sealed with a biodegradable sealing member so as to cover the opening portion, and said sealing member comprises a laminate of a gas-barrier member coated with a biodegradable resin.

In the container with cap having the sealing member of the present invention, it is desired that the biodegradable resin is a polylactic acid

In the present invention, an important feature resides in that the cap comprises a cap shell including a top panel and a skirt portion, and a liner member applied to the inner surface of the top panel of the cap shell, wherein the cap shell is made of a resin composition of a hard aliphatic polyester resin (A) and a soft aliphatic polyester resin (B) which are blended at a weight ratio of A:B = 20:80 to 80:20, and the liner member has biodegrading property.

In forming the caps by the injection forming or the compression forming, the formed articles are usually forcibly taken out from the metal mold from the standpoint of productivity. However, the hard aliphatic polyester resin (A) as represented by the polylactic acid is highly rigid as described above. If forcibly taken out, therefore, the formed articles are often damaged.

From the above point of view according to the present invention, the cap shell is formed by using a resin comprising a hard aliphatic polyester resin (A) and a soft aliphatic
polyester resin (B), so that the cap shell can be forcibly taken out from the metal mold to improve the productivity.

Upon being blended with the soft aliphatic polyester resin (B), on the other hand, the hardness of the cap shell becomes lower than that of an article formed by using the hard aliphatic polyester resin (A) alone. If the cap is applied in its form to a container formed by using a hard biodegradable polyester resin like a container of polylactic acid, therefore, the cap is abraded and a resin powder generates due to the friction between the mouth portion of the container and the inner surface of the cap at the time of the opening/closing operation. According to the present invention, however, a separately formed liner member is provided on the inner surface of the top panel of the cap shell. Therefore, the end of the mouth portion of the container does not come into direct contact with the inner surface of the top panel of the cap shell making it possible to effectively prevent the generation of resin powder at a portion where the resin powder is likely to be mixed into the content. Further, since the liner member having biodegrading property is separately formed and is applied, the cap as a whole exhibits biodegrading property and improved sealing.

The above effect of the present invention will become obvious from the results of Examples. That is, when a cap shell is formed by using a resin composition of a polylactic acid which is a hard aliphatic polyester resin blended with a polybutylene succinate which is a soft aliphatic polyester resin in an amount smaller than the above range, the cap shell is cracked if it is forcibly taken out from the metal mold (Comparative Example 2). When the amount of the soft aliphatic polyester resin is larger than the above range, on the other hand, the skirt portion of the cap shell is torn off if the cap is forcibly taken out (Comparative Example 3). In either case, the cap shell is not formed. On the other hand, the cap of the present invention formed by using a resin composition of a polylactic acid which is a hard aliphatic polyester resin blended with a polybutylene succinate which is a soft aliphatic polyester resin in an amount within the above range, is not damaged even if it is forcibly taken out from the metal mold.

In the cap of the present invention, an important feature further resides in that the liner member that is used has biodegrading property. This enables the cap as a whole to exhibit biodegrading property and improved sealing.

That is, when no liner member is used, the resin powder generates due to the abrasion between the cap and the mouth portion of the container as described above and, besides, no satisfactory sealing result is obtained at 30 deg. C (Comparative Example 1). When using the liner member according to the present invention, on the other hand, satisfactory results are obtained concerning both preventing the generation of resin powder and sealing.

It is further particularly desired that the cap of the invention is applied to the containers formed by using a biodegradable resin such as polylactic acid. That is, as described above, the cap of the invention effectively prevents the generation of resin powder even when it is applied to the containers formed by using a hard biodegradable resin such as polylactic acid. By applying the cap to the containers formed by using the biodegradable resin, therefore, the packing containers as a whole exhibit biodegrading property offering excellent friendliness to the environment.

According to another embodiment of the invention, further, an important feature resides in a container with cap in which a cap shell having a top panel and a skirt portion and made of a resin composition of a hard aliphatic polyester resin (A) and a soft aliphatic polyester resin (B) which are blended at a weight ratio of A:B = 20:80 to 80:20, is applied to the container made of a hard biodegradable polyester resin, wherein the container is heat-sealed with a sealing member having biodegrading property so as to cover the opening portion.

That is, even by using the liner member used for the cap of the invention as the sealing member for the mouth portion of the container, it is allowed to effectively prevent the generation of resin powder caused by the abrasion between the cap shell and the mouth portion of the container due to the opening/closing operation. Besides, the mouth portion of the container is heat-sealed with the sealing member before the cap shell is applied thereto to further improve the sealing of the container.

### Brief Description of the Drawings

Fig. 1 is a side sectional view illustrating a cap of the present invention;
Fig. 2 is a side sectional view illustrating another cap of the present invention;
Fig. 3 is a side sectional view of a container with cap of when a cap shell is applied to a container of which the opening portion has been heat-sealed with a sealing member; and
Fig. 4 is a side sectional view of the container with cap of when the cap shown in Fig. 1 is applied to the container of which the opening portion has been heat-sealed with the sealing member.

### Best Mode for Carrying Out the Invention

### (Cap Shell)

As described above, it is important that the cap and the cap shell used for the container with cap of the invention are made of a resin composition of a hard aliphatic polyester resin (A) and a soft aliphatic polyester resin (B) which are blended at a weight ratio of A:B = 20:80 to 80:20 and, particularly, 30:70 to 70:30.
(A) Hard aliphatic polyester resin.

The hard aliphatic polyester resin used in the present invention preferably comprises an aliphatic polyester which is chiefly a lactic acid, and chiefly comprises recurring units expressed by the following formula (I),

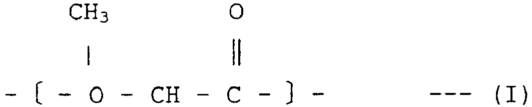

The most preferred hard aliphatic polyester resin comprises a polylactic acid and, particularly, comprises a constituent unit which is substantially an L-lactic acid containing a D-lactic acid which is an optical isomer in an amount of not larger than 6.0%.

It is desired that, though not limited thereto only, the polylactic acid that is used has a weight average molecular weight (Mw) in a range of 10, 000 to 300,000 and, particularly, 20,000 to 250,000. It is further desired that its density is 1.26 to 1.20 g/cm³, melting point is 160 to 200°C, and melt flow rate (ASTM D1238, 190°C) is in a range of 2 to 20 g/10 minutes.

The hard aliphatic polyester resin (A) used in the present invention is not limited to the above polylactic acid only but may be any other hard aliphatic polyester resins like polyhydroxyalkanoates, such as 3-hydroxybutylate, 3-hydroxyvalerate, 3-hydroxycaproate, 3-hydroxyheptanoate, 3-hydroxyoctanoate, 3-hydroxynanoate, 3-hydroxydecanoate, γ-butylolactone, δ-valerolactone and ε-caprolactone, as well as polyglycolic acid or copolymers thereof.

It is desired that the hard aliphatic polyester resin (A) has a storage modulus of elasticity (E') at a temperature of 30 to 50°C of not smaller than 3.20 x 10⁹ Pa. (B) Soft aliphatic polyester resin.

The soft aliphatic polyester resin used in the present invention may be these obtained by polycondensing an aliphatic carboxylic acid with an aliphatic polyhydric alcohol. These aliphatic polyester resins have excellent biodegrading property and a suitable degree of flexibility. Therefore, use of the soft aliphatic polyester resin in combination with the hard aliphatic polyester resin makes it possible to improve the shock resistance without impairing the forming property.

As the aliphatic carboxylic acid, there can be exemplified oxalic acid, succinic acid, adipic acid, sebacic acid, dodecanedioic acid, maleic acid and linoleic acid. As the aliphatic polyhydric alcohols, there can be exemplified ethylene glycol, propylene glycol, butylene glycol, hexane glycol, diethylene glycol, triethylene glycol and neopentyl glycol.

Concretely, there can be exemplified polybutylene succinate, polyethylene succinate, polyethylene oxalate, polyethylene adipate, polyhexyl adipate, polypropylene adipate, polybutylene adipate, and polybutylene terephthalate adipate. Particularly, however, it is desired to use the polybutylene succinate from the standpoint of biodegrading property.

It is desired that the aliphatic polyester resin has a storage modulus of elasticity (E') at 30 to 50°C in a range of larger than 1.20 x 10⁹ Pa but smaller than 3.20 x 10⁹ Pa.

The resin composition used for forming the cap shell of the present invention may contain an inorganic filler in an amount of 0 to 20 parts by weight and, particularly, in an amount of 0.1 to 10 parts by weight per 100 parts by weight of the resin composition in order to improve melting property of the resin composition, to enhance melt-formability and to improve stability in the shape during the heat-treatment.

As the inorganic filler, there can be exemplified talc, kaolin, clay and kaolinite and, particularly, the one that contains SiO₂ in an amount of not smaller than 50% by weight. The inorganic filler having an average particle size in a range of 0.1 to 50 µm can be desirably used.

Further, the resin composition used for forming the cap shell of the invention can be blended with a variety of known blending agents depending upon the use, such as lubricant, plasticizer, leveling agent, surfactant, viscosity-imparting agent, viscosity-decreasing agent, stabilizer, antioxidant and ultraviolet ray-absorbing agent according to a known recipe.

The resin composition used for the cap shell of the present invention can be obtained by dry-mixing the above components relying on a known method such as using the Henschel's mixer, V-blender, ribbon blender or tumbler blender, or by further melt-kneading the thus obtained mixture by using a monoaxial extruder, biaxial extruder, kneader or Bumbury's mixer.

The cap shell may assume any known shape comprising a top panel and a skirt portion. From the standpoint of preventing the generation of resin powder caused by the abrasion between the cap shell and the mouth portion of the container due to the opening/closing operation, it is desired that the cap shell has such a shape that the skirt portion is threaded. The cap shell, however, may be engaged with, and fixed to, the mouth portion of the container by the engaging protuberance.

The cap shell can be formed by a known forming method such as injection-forming or compression-forming. According to the present invention, the cap shell can be formed by the forced-take-out forming method without using split molds, featuring excellent productivity.

### (Liner Member)

It is important that the liner member used for the invention has biodegrading property, does not generate resin powder caused by abrasion with the mouth portion of a hard container such as a container of polylactic acid, and has sealing property and formability.

As a preferred liner member, there can be exemplified a liner member obtained by coating a paper with a biodegradable resin or a liner member comprising the biodegradable resin.

In the case of the liner member obtained by coating the paper with the biodegradable resin, at least the surface of the paper that comes in contact with the mouth portion of the container is applied with the molten biodegradable resin to form the liner member.

As the biodegradable resin with which the paper is coated, there can be exemplified the above hard aliphatic polyester resin (A) and, particularly, the polylactic acid. The layer comprising the polylactic acid is formed in a thickness of 20 to 100 µm on the paper.

In the case of the liner member comprising the biodegradable resin, it is important that the surface that comes in contact with the mouth portion of the container comprises the hard aliphatic polyester resin or a composition containing the hard aliphatic polyester resin as a chief component from the standpoint of preventing the generation of resin powder caused by abrasion. If the hard aliphatic polyester resin is used alone, however, the formability is poor and it is difficult to obtain sealing as will become obvious from Comparative Example 4 appearing later. It is, therefore, desired that the liner member comprises a laminate of a base member of a resin layer of the above soft aliphatic polyester resin (B) and a surface layer of the hard aliphatic polyester resin (A) on the surface that comes in contact with the mouth portion of the container.

In this laminate, in general, it is desired that the soft aliphatic polyester resin (B) has a thickness of 100 to 900 pm and the hard aliphatic polyester resin (A) has a thickness of 20 to 100 µm from the standpoint of sealing and formability.

By forming the biodegradable resin as a foamed material, further, the liner member exhibits improved sealing property. The foamed material of polylactic acid which is the hard aliphatic polyester resin makes it possible to form a liner using the hard aliphatic polyester resin alone.

The foamed material of the aliphatic polyester resin can be formed by a known method of forming a foamed material of an aliphatic polyester resin by, for example, being blended with an amorphous resin such as polystyrene or, as required, being blended with a foaming agent.

Further, the biodegradable resin having gas-barrier property makes it possible to improve the gas-barrier property of the cap. This prevents the permeation of gas through the cap, and offers an advantage of preserving the content since oxygen does not permeate through from the exterior. Polyglycolic acid is exemplified as the biodegradable resin having gas-barrier property.

The liner member may be of the shape of a flat plate punched into the shape of the inner surface of the top panel, or may be of the shape of the known liner member such as forming an inner ring and/or an outer ring by the press-forming so as to be corresponded to the shape of the mouth portion of the container.

When the liner member is provided with the inner ring or when a tamper-evident band is formed in the cap shell, it is desired that the liner member is not fixed by adhesion to the cap shell.

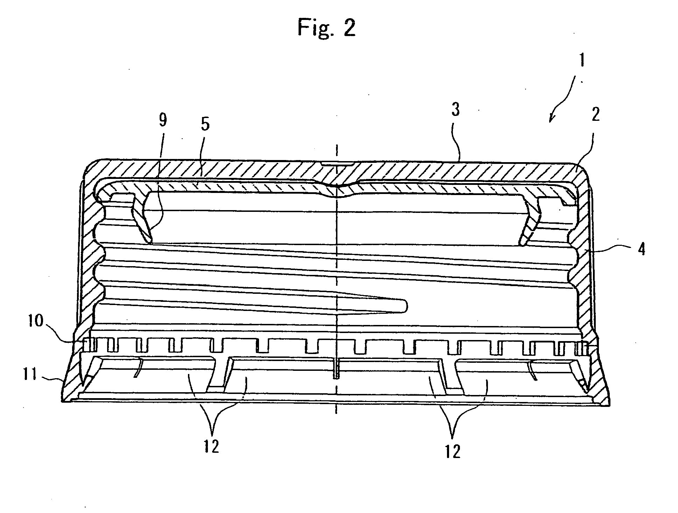

That is, in the case of the liner member forming the inner ring as will be described later with reference to Fig. 2, the sealing is maintained due to close contact of the mouth portion of the container and the inner ring. Therefore, if the liner member follows the turn of the cap shell accompanying the opening/closing operation of the cap, the initial torque increases at first, and the cap cannot be favorably opened. Further, when the tamper-evident band is formed, it is desired that the container is unsealed after the weakened portion is broken between the lower end of the skirt portion and the tamper-evident band from the standpoint of making the tamper evidence more reliable. In the initial stage of the unsealing operation, therefore, it is desired that the liner member does not readily follow the cap shell that rises but the liner member rises following the cap shell after the weakened portion has been broken. In this case, therefore, it is desired that the liner member is held by the engaging protuberances formed at the upper part in the inner surface of the skirt portion and by the upper thread of the threaded portion, and remains to be integral with the cap shell while forming a gap relative to the inner surface of the top panel of the cap shell.

### (Cap)

The cap of the present invention can assume various forms like the conventional plastic caps provided it maintains the combination of the above-mentioned cap shell and the liner member having biodegrading property.

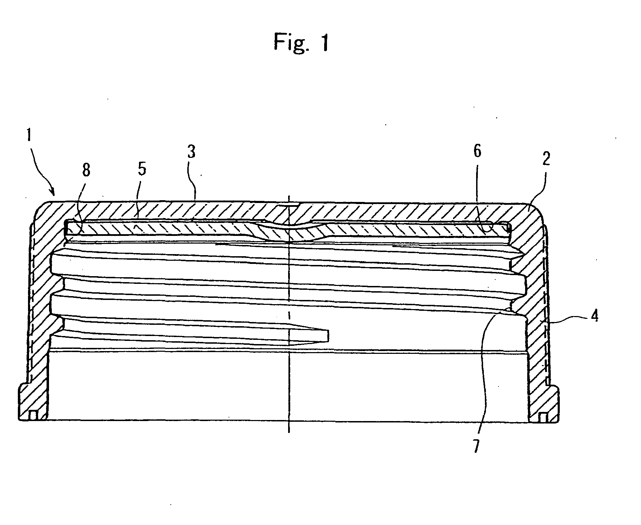

Fig. 1 is a view illustrating a cap of the invention. Namely, the cap of the invention generally designated at 1 comprises a cap shell 2 that includes a top panel 3 and a skirt portion 4 hanging down from the circumferential edge of the top panel 3, and a biodegradable liner member 5 provided on the inner surface of the top panel 3 of the cap shell 2.

In the concrete example shown in Fig. 1, a contact ring 6 is formed on the inner surface of the top panel 3 in order to decrease the contact area between the liner member 5 and the inner surface of the top panel 3. Further, a threaded portion 7 is formed on the inner surface of the skirt portion 4 of the cap shell 2 so as to be screw-engaged with the mouth portion (not shown) of the container. Further, an annular protuberance 8 is formed at an upper part on the inner surface of the skirt portion 4 close to the top panel 3, and holds the liner member 5.

Fig. 2 is a view illustrating another cap of the invention. To further improve the sealing in this embodiment, the liner member 5 has an inner ring 9 formed thereon, and a tamper-evident band 11 is formed at the lower end of the skirt portion 4 of the cap shell 2 via a weakened portion 10 that can be broken. The tamper-evident band 11 has a plurality of flap pieces 12 extending upward from the lower end thereof. At the time of unsealing, the flap pieces 12 engage with the engaging protuberances formed on the mouth portion (not shown) of the container whereby the weakened portion 10 is broken, only the cap over the weakened portion 10 rises while the tamper-evident band 11 stays on the mouth portion of the container, enabling the person to learn at a glance that the cap was once unsealed.

In the caps shown in Figs. 1 and 2, the liner member is formed separately from the cap shell but is integral with the cap shell being fitted therein so as to be held by an annular protuberance or a threaded portion in the cap shell. After separately formed, however, the liner member may be adhered to the inner surface of the top panel of the cap shell with an adhesive.

Further, a molten mass of a biodegradable resin for forming the liner member may be directly applied onto the inner surface of the top plate of the cap shell, and may be compression-formed to thereby form the liner member while, at the same time, setting the liner member in the cap shell.

The contact portion between the cap shell and the liner member can be formed in any shape so as to decrease the contact area between the liner member and the inner surface of the top panel of the cap shell. For example, a protuberance (contact ring) is formed on the top panel of the cap shell to decrease the contact between the liner surface and the inner surface of the top panel of the cap shell. This minimizes the contact surface between the cap shell and the liner member, and makes it possible to close the cap without requiring unnecessarily large torque or without producing friction up to the final step of fastening the cap (fastening angle, fastening torque). Upon selecting the shape of the cap shell as described above, the cap can be opened and closed more favorably.

By applying the cap of the invention to a hard container, no resin powder of the liner member is generated by the abrasion between the mouth portion of the container and the liner member despite of the opening/closing operation. Therefore, the cap of the invention can be effectively applied to the container made of a hard aliphatic polyester resin such as polylactic acid to provide a packaging container which as a whole, inclusive of the cap, exhibits excellent biodegrading property.

### (Container with Cap)

The container with cap of the invention is formed by applying the above-mentioned cap (having the liner member in the cap shell) to the container made of the hard biodegradable polyester resin, or by applying the above-mentioned cap shell or the cap to a container made of the hard biodegradable polyester resin with its opening portion being heat-sealed with a sealing member.

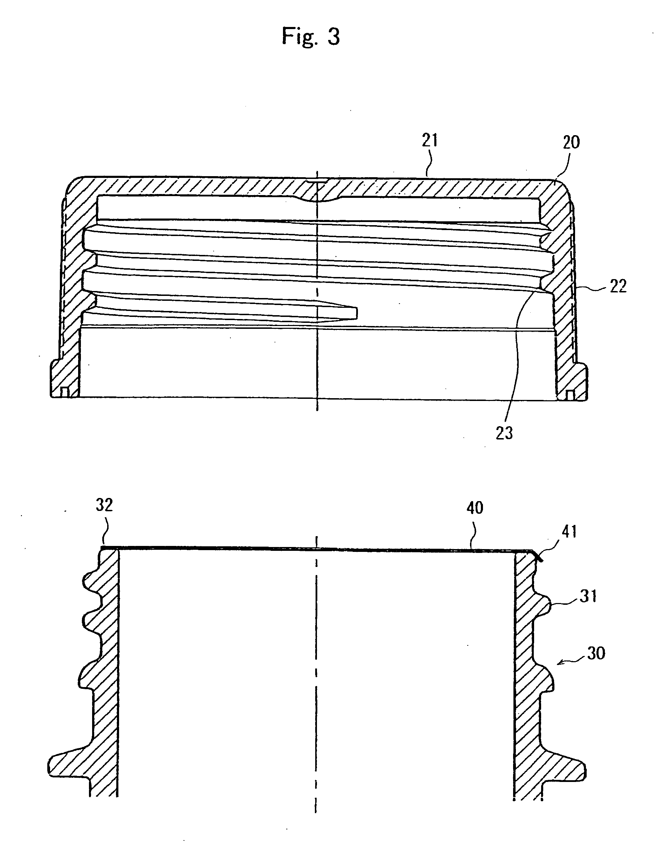

Fig. 3 is a side sectional view illustrating a container with cap of the present invention. The cap shell 20 comprises a top panel 21 and a skirt portion 22 hanging down from the circumferential edge of the top panel 21. A threaded portion 23 is formed on the inner surface of the skirt portion 22 of the cap shell 20 to screw-engage with a threaded portion 31 formed on the mouth portion 30 of the container. An end 32 of opening of the mouth portion 30 of the container is heat-sealed with a sealing member 40. The sealing member 40 has a tab 41 formed at a portion of the circumferential edge thereof for unsealing.

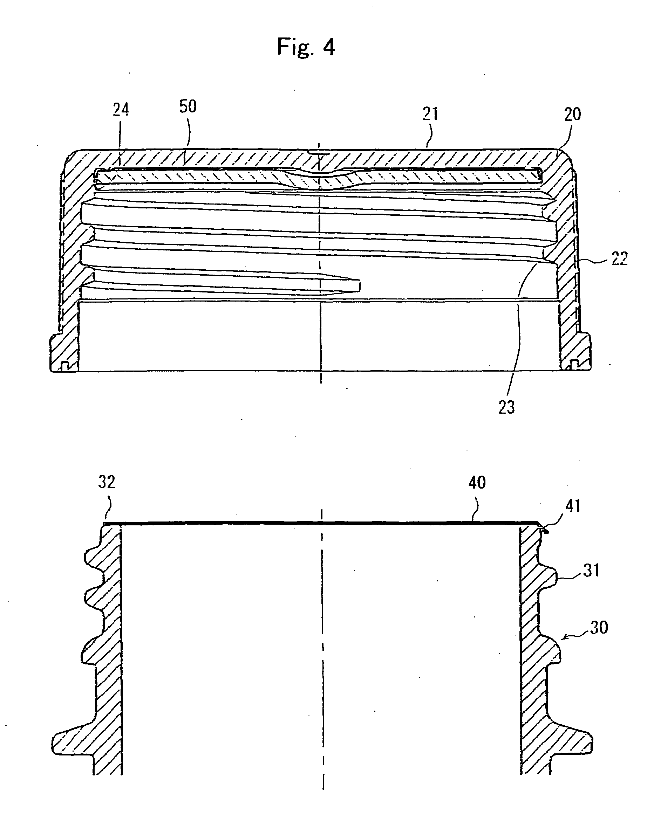

Fig. 4 is a side sectional view illustrating another container with cap of the invention which is the same as the one shown in Fig. 3 except that the cap shell 20 is provided with the a liner member 50. The liner member 50 is integrally held in the cap shell 20 by an annular protuberance 24 formed at an upper part on the inner surface of the skirt portion 22. According to this embodiment, even when the cap is once unsealed by stripping off the sealing member 40 and is resealed, the sealing is maintained, but the end 32 of opening of the mouth portion 30 of the container does not come in direct contact with the top panel 21 of the cap shell 20 effectively preventing the generation of resin powder caused by abrasion of the cap shell and the mouth portion of the container due to the opening/closing operation.

As the sealing member with which the opening portion of the container is heat-sealed, there can be used the one which is the same as the above-mentioned liner member so far as it can heat-seal the opening portion of the container. In addition to the above, however, there can be further favorably used a sealing member of a laminate obtained by coating the gas-barrier member with a biodegradable resin. This makes it possible to improve the preservation of the content.

As the gas-barrier member, there can be used a foil of a light metal such as aluminum, an ethylene/vinyl alcohol copolymer or a gas-barrier resin such as polyamide resin in addition to the one comprising a biodegradable resin such as the above polyglycolic acid. The gas-barrier member is not favorably biodegradable. When unsealed, first, however, the sealing member is discarded separately from the container or the cap. Besides, the biodegradable packing containers are, generally, allowed to use a non-biodegradable material in an amount of less than 1% of the whole materials. In the container with cap of the present invention, the cap shell, the liner member and the container are all made of the biodegradable materials, and it is allowable to use the above gas-barrier member as the sealing member.

It is desired that the biodegradable resin with which the paper or the gas-barrier member is to be coated for forming the sealing member is the polylactic acid as described above concerning the liner member. Like in the case of the liner member, the molten biodegradable resin is applied to at least the surface of the paper or the gas-barrier member that comes in contact with the mouth portion of the container, and is dried to form the sealing member. Like in the case of the liner member, it is desired that the coating layer has a thickness in a range of 20 to 100 µm.

As the hard biodegradable polyester resin used for the container with cap of the present invention, there can be exemplified the hard aliphatic polyester (A) described above as the material of the cap shell and, particularly, the polylactic acid.

The container comprising the hard biodegradable polyester resin can be formed by a known forming method such as injection forming, extrusion forming, compressed air forming, direct blow forming or biaxial draw-blow forming. The biodegradable polyester resin and, particularly, the polylactic acid exhibits increased strength when it is draw-formed. It is, therefore, desired that the container made of the hard biodegradable polyester resin is the one obtained by draw forming, such as biaxial draw-blow forming.

It is desired that the hard biodegradable polyester resin contains an inorganic filler in an amount of 0 to 20 parts by weight and, particularly, 0.1 to 10 parts by weight per 100 parts by weight of the resin like when forming the cap shell in order to improve the melt formability as well as the shape stability during the heat treatment.

### EXAMPLES

Next, the invention will be described by way of Examples.

### [Example 1] (This example is outside the scope of the claimed invention.)

### (Cap Shell)

A resin composition comprising 55% by weight of a polylactic acid resin containing an optically active isomer in an amount of 3% and having a weight average molecular weight of 190, 000, 45% by weight of a polybutylene succinate resin and 0.3% by weight of an aliphatic amide-type lubricant, was melt-mixed together at 220°C in a biaxial extruder, strand-formed, and was pelletized. The above resin was melted at 200°C in an injection-forming machine, and was injection-formed into a screw cap. By employing the conventional injection-forming technology, the injection-formed article was taken out from the metal mold by the forced-take-out forming method. Next, the article was cooled down to room temperature, left to stand at room temperature for 3 days, and was put to the capping test.

### (Cap Liner Member)

By using an extrude-casting machine, a molten polylactic acid resin was cast in a thickness of 30 µm onto one surface of a 280 µm-thick 100% virgin paper to form a sheet on which the polylactic acid layer is laminated. Next, the sheet on which the polylactic acid layer was laminated was punched into a circle of a diameter of 36 mm, and was fitted to the top panel of the cap shell with the polylactic acid resin layer on the side of the content.

### (Bottle)

By using an injection-forming machine, a polylactic acid containing an optically active isomer in an amount of 1.5% and having a weight average molecular weight of 190,000 was injection-formed at 230°C into a preform with bottom. Next, by using a blow-forming machine, the injection-formed preform was heated. The preform with bottom was introduced into a blow metal mold which was, then, closed. By using a stretch rod and a highly compressed gas, the preform was draw-blown into the shape of a bottle (cylindrical bottle having a full-filled content of 240 ml, an inner diameter of mouth of 32 mm and an outer diameter of mouth of 35 mm).

### (Filling)

The above bottle was filled with 220 ml of city water colored with a red ink and maintained at 5°C, and was capped with a screw cap equipped with a liner member of the above paper on which the polylactic acid layer has been laminated with a closing torque of 150 N-cm.

### (Punching)

The sheet on which the polylactic acid layer has been laminated and a single-layer sheet were punched into circles of a diameter of 36 mm. When the sheet powder was formed and the cracks occurred after the punching, the forming was regarded to be defective X. When no sheet powder was formed and no crack occurred, on the other hand, it was so judged that the liner member was favorably punched ○.

### (Generation of powder after the cap opening/closing operation)

After having been capped with a predetermined torque, the cap was once opened to observe if an abraded powder of the cap member was formed on the top panel of the cap which is a portion where the bottle and the cap contact to each other and on the threaded portions of the cap and of the mouth portion of the bottle. When the abraded powder of the cap member was formed through the operation of closing and opening the cap, it was so judged that the powder has generated X. When no powder was observed, it was so regarded that no powder has generated ○.

### (Sealing)

The bottle filled with red water was capped with a predetermined torque, fell down sideways and was left to stand at 5°C or 30°C each for 24 hours. After left to stand for 24 hours, the cap was opened. When the red water was infiltrating into the threaded portion of the cap or into the threaded portion of the bottle passing through the contact portion between the cap and the end of the mouth portion of the bottle, the sealing was regarded to be defective X. When unsealing of the cap after left to stand for 24 hours proved that no red water has reached the threaded portion of the cap or the threaded portion of the bottle passing through the contact portion between the cap and the end of the mouth portion of the bottle, the sealing was regarded to be favorable ○.

### [Example 2]

By using a two-kind-two-layer coextruder and a T-die, a polybutylene succinate resin was melt-extruded at 200°C through the first extruder, and the polylactic acid resin containing an optically active isomer in an amount of 3% and having a weight average molecular weight of 190, 000 was melt-extruded at 200°C through the second extruder. A two-kind-two-layer multi-layer sheet was extruded through the T-die and was readily cooled by chilling rolls, and was taken up. In this case, the polybutylene succinate layer possessed a thickness of 300 µm while the polylactic acid layer possessed a thickness of 30 µm. Next, the polybutylene succinate sheet on which the polylactic acid layer has been laminated was punched into a circle of a diameter of 36 mm, and the circular sheet was fitted to the top panel of the cap shell that was injection-formed in the same manner as in Example 1 with the polylactic acid resin layer on the side of the content. The procedure was thereafter conducted in the same manner as in Example 1 but forming the liner member in a two-layer structure of the biodegradable resin.

### [Example 3]

By using the two-kind-two-layer coextruder and the T-die, a polycaprolactone resin was melt-extruded at 200°C through the first extruder, and the polylactic acid resin containing an optically active isomer in an amount of 3% and having a weight average molecular weight of 190,000 was melt-extruded 200°C through the second extruder. A two-kind-two-layer multi-layer sheet was extruded and blow-formed through the T-die and was readily cooled by chilling rolls, and was taken up. The polycaprolactone resin layer possessed a thickness of 300 µm while the polylactic acid layer possessed a thickness of 30 µm. Next, the polycaprolactone resin multi-layer sheet on which the polylactic acid layer has been laminated was punched into a circle of a diameter of 36 mm, and the circular sheet was fitted to the top panel of the cap shell that was injection-formed in the same manner as in Example 1 with the polylactic acid resin layer on the side of the content. The procedure was thereafter conducted in the same manner as in Example 2 but forming the liner member in a two-layer structure of the polylactic acid and the polycaprolactone resin.

### [Example 4]

By using the two-kind-two-layer coextruder and the T-die, a polybutylene succinate resin dry-blended with 3% by weight of a foaming material, Master Batch (Polystyrene EB106), was melt-extruded at 205°C through the first extruder, and the polylactic acid resin was melt-extruded 200°C through the second extruder. A two-kind-two-layer multi-layer sheet was extrusion-formed through the T-die and was readily cooled by chilling rolls, and was taken up. In this case, too, the foamed polybutylene succinate layer possessed a thickness of 300 µm while the polylactic acid layer possessed a thickness of 30 µm. Next, the foamed sheet on which the polylactic acid layer has been laminated was punched into a circle of a diameter of 36 mm, and the circular sheet was fitted to the top panel of the cap shell that was injection-formed in the same manner as in Example 1 with the polylactic acid resin layer on the side of the content. The procedure was thereafter conducted in the same manner as in Example 1 but forming the liner member in a two-layer structure of the polylactic acid and the biodegradable foamed resin other than the polylactic acid resin.

### [Example 5]

By using an injection-forming machine, a liner member of a diameter of 36 mm and a thickness of 1 mm was injection-formed by using a polylactic acid resin containing an optically active isomer in an amount of 3% and having a weight average molecular weight of 190,000 and a polybutylene terephthalate adipate at a weight ratio of 60: 40 at a temperature of 200°C. The procedure was thereafter conducted in the same manner as in Example 1 but using a cap shell having a contact ring that was formed in a width of 0.5 mm protruding on the inner surface of the cap shell toward side of the content in order to decrease the contact surface between the surface of the cap shell and the surface of the formed liner.

### [Comparative Example 1]

A cap was formed in the same manner as in Example 1 but without the liner member. In this case, the cap could be injection-formed. When the cap was opened and closed, however, an abrasion powder stemming from the cap was confirmed.

### [Comparative Example 2]

A resin composition comprising 90% by weight of a polylactic acid resin containing an optically active isomer in an amount of 3% and having a weight average molecular weight of 190, 000, 10% by weight of a polybutylene succinate resin and 0.3% by weight of an aliphatic amide-type lubricant, was melt-mixed at 220°C and was strand-formed by using a biaxial extruder, and was pelletized. The resin was melted at 200°C by using an injection-forming machine and was injection-formed into a screw cap. Based on a conventional injection-forming technology, the injection-formed article was taken out from the metal mold by the forced-take-out forming method. In this case, however, the cap that was injection-formed was cracked when it was being taken out by the forced-take-out forming method. Therefore, the cap could not be injection-formed.

### [Comparative Example 3]

A resin composition comprising 10% by weight of a polylactic acid resin containing an optically active isomer in an amount of 3% and having a weight average molecular weight of 190, 000, 90% by weight of a polybutylene succinate resin and 0.3% by weight of an aliphatic amide-type lubricant, was melt-mixed at 220°C and was strand-formed by using the biaxial extruder, and was pelletized. The resin was melted at 200°C by using the injection-forming machine and was injection-formed into a screw cap. Based on a conventional injection-forming technology, the injection-formed article was taken out from the metal mold by the forced-take-out forming method. In this case, however, the cap that was injection-formed was torn off when it was being taken out by the forced-take-out forming method. Therefore, the cap could not be injection-formed.

### [Comparative Example 4]

By using a single-layer extruder, the polylactic acid resin containing an optically active isomer in an amount of 3% and having a weight average molecular weight of 190,000 was melt-extruded at 200°C and was formed into a sheet of a thickness of 300 µm. Next, the sheet was punched into a circle of a diameter of 36 mm. The procedure was thereafter conducted in the same manner as in Example 1 but fitting the circular sheet onto the top panel of the cap injection-formed in the same manner as in Example 1 in a manner that the polylactic acid layer was on the side of the content. In this case, however, the polylactic acid single-layer sheet was cracked when it was being punched into a circle of 36 mm in diameter, and the liner member could not be obtained by punching from the polylactic acid single-layer sheet.

### [Comparative Example 5]

By using the single-layer extruder, the polybutylene succinate resin was melt-extruded at a temperature of up to 200°C and was formed into a sheet of a thickness of 300 µm. Next, the sheet was punched into a circle of a diameter of 36 mm. The procedure was thereafter conducted in the same manner as in Example 1 but fitting the circular sheet onto the top panel of the cap injection-formed in the same manner as in Example 1 in a manner that the polybutylene succinate layer was on the side of the content. In this case, however, the abrasion powder due to the cap was generated much when the cap was opened and closed.

### [Example 6] (This example is outside the scope of the claimed invention.)

### (Cap Shell)

A resin composition comprising 55% by weight of a polylactic acid resin containing an optically active isomer in an amount of 3% and having a weight average molecular weight of 190, 000, 45% by weight of a polybutylene succinate resin and 0.3% by weight of an aliphatic amide-type lubricant, was melt-mixed at 220°C and was strand-formed by using the biaxial extruder, and was pelletized. The injection forming was conducted relying upon the conventional injection-forming technology, and the product was taken out from the metal mold by the forced-take-out forming method. Next, after cooled to room temperature, the product was left to stand for 3 days at room temperature and was put to the capping test.

### (Sealing Member)

By using an extrude-casting machine, a low-melting polylactic acid containing an optically active isomer in an amount of 10%, having a weight average molecular weight of 50, 000 and a melting point of not higher than 140°C was formed into a 20 µm-thick film and was laminated on a thin aluminum film of a thickness of 25 µm. This laminate was punched into a circle of a diameter of 40 mm with tab, and was used as a sealing member.

### (Bottle)

By using an injection-forming machine, a polylactic acid containing an optically active isomer in an amount of 1.5% and having a weight average molecular weight of 190,000 was injection-formed at 230°C into a preform with bottom. Next, by using a blow-forming machine, the injection-formed preform was heated. The preform with bottom was introduced into a blow metal mold which was, then, closed. By using a stretch rod and a highly compressed gas, the preform was draw-blown into the shape of a bottle (cylindrical bottle having a full-filled content of 240 ml, an inner diameter of mouth of 32 mm and an outer diameter of mouth of 35 mm).

### (Filling)

The above bottle was filled with 220 ml of city water colored with a red ink and maintained at 5°C. Next, the top surface of mouth of the bottle was heat-sealed with the sealing member being pressed with a heated plate.

**Table 1**

| | Injection formability of cap | Liner member | Sealing member | Cap openability | Sealing | |
|---|---|---|---|---|---|---|
| | Formable, Not formable | Punched | | Powder | 5°C | 30°C |
| Ex. 1 | ○ | ○ | - | ○ | ○ | ○ |
| Ex. 2 | ○ | ○ | - | ○ | ○ | ○ |
| Ex. 3 | ○ | ○ | - | ○ | ○ | ○ |
| Ex. 4 | ○ | ○ | - | ○ | ○ | ○ |
| Ex. 5 | ○ | - | - | ○ | ○ | ○ |
| Ex. 6 | ○ | | applied | ○ | ○ | ○ |
| Comp. Ex. 1 | ○ | - | - | × | ○ | × |
| Comp. Ex. 2 | × | - | - | - | - | - |
| Comp. Ex. 3 | × | - | - | - | - | - |
| Comp. Ex. 4 | ○ | × | - | - | - | - |
| Comp. Ex. 5 | ○ | ○ | - | × | ○ | ○ |

## Claims

1. A cap having biodegrading property comprising a cap shell including a top panel and a skirt portion, and a liner member applied to the inner surface of the top panel of the cap shell, wherein the cap shell is made of a resin composition of a hard aliphatic polyester resin (A) and a soft aliphatic polyester resin (B) which are blended at a weight ratio of A:B = 20:80 to 80:20, **characterised in that** the liner member (i) comprises a laminate of a base member of a resin layer of a soft aliphatic polyester resin positioned on the inner surface of the top panel of the cap shell and a surface layer of a hard aliphatic polyester resin on the surface that comes in contact with the mouth portion of the container, or (ii) comprises a resin composition of a polylactic acid resin (C) and a polybutylene terephthalate adipate resin (D) blended at a weight ratio of C:D = 60:40.

2. The cap according to claim 1, wherein said hard aliphatic polyester resin (A) is a polylactic acid.

3. The cap according to claim 1 or claim 2, wherein said soft aliphatic polyester resin (B) is a polybutylene succinate.

4. The cap according to any of the preceding claims, wherein said liner member comprises a foamed material of a biodegradable resin.

5. The cap according to any of the preceding claims, wherein said liner member has a layer of a biodegradable gas-barrier resin.

6. The cap according to any of the preceding claims, wherein said liner member has an inner ring.

7. The cap according to any of the preceding claims, wherein a tamper-evident band is formed at the lower end of said cap shell.

8. A container with cap, wherein the cap of any of the preceding claims is applied to a container made of a hard biodegradable polyester resin.

9. The container with cap according to claim 8, wherein said container is heat-sealed with a biodegradable sealing member so as to cover the opening portion, and said sealing member comprises a laminate of a gas-barrier member coated with a biodegradable resin.

10. The container with cap according to claim 9, wherein said biodegradable resin is a polylactic acid.

## Patentansprüche

1. Deckel mit der Eigenschaft des biologischen Abbaus, der Folgendes umfasst: ein Deckelgehäuse, das eine Oberseite und einen Randteil einschließt, und ein Auskleidungselement, das auf die innere Oberfläche der Oberseite des Deckelgehäuses aufgebracht ist, worin das Deckelgehäuse aus einer Harzzusammensetzung eines harten aliphatischen Polyesterharzes (A) und eines weichen aliphatischen Polyesterharzes (B), die in einem Gewichtsverhältnis von A : B = 20 : 80 bis 80 : 20 vermischt sind, hergestellt ist, **dadurch gekennzeichnet, dass** das Auskleidungselement (i) einen Schichtstoff eines Grundelements einer Harzschicht eines weichen aliphatischen Polyesterharzes, der sich auf der inneren Oberfläche der Oberseite des Deckelgehäuses befindet, und eine Oberflächenschicht eines harten aliphatischen Polyesterharzes auf der Oberfläche, die mit dem Mundabschnitt des Behälters in Kontakt kommt, umfasst oder (ii) eine Harzzusammensetzung eines Polymilchsäureharzes (C) und eines Polybutylenterephthalatadipatharzes (D), die in einem Gewichtsverhältnis von C : D = 60 : 40 vermischt sind, umfasst.

2. Deckel nach Anspruch 1, worin das genannte harte aliphatische Polyesterharz (A) eine Polymilchsäure ist.

3. Deckel nach Anspruch 1 oder Anspruch 2, worin das genannte weiche aliphatische Polyesterharz (B) ein Polybutylensuccinat ist.

4. Deckel nach einem der vorstehenden Ansprüche, worin das genannte Auskleidungselement ein geschäumtes Material eines biologisch abbaubaren Harzes umfasst.

5. Deckel nach einem der vorstehenden Ansprüche, worin das genannte Auskleidungselement eine Schicht eines biologisch abbaubaren Harzes mit Gasbarriere aufweist.

6. Deckel nach einem der vorstehenden Ansprüche, worin das genannte Auskleidungselement einen inneren Ring aufweist.

7. Deckel nach einem der vorstehenden Ansprüche, worin ein Sicherungsband am unteren Ende des genannten Deckelgehäuses ausgebildet ist.

8. Behälter mit Deckel, worin der Deckel nach einem der vorstehenden Ansprüche auf einen Behälter angebracht wird, der aus einem harten biologisch abbaubaren Polyesterharz hergestellt wurde.

9. Behälter mit Deckel nach Anspruch 8, worin der genannte Behälter mit eine biologisch abbaubaren Dichtungselement hitzeversiegelt ist, um den Öffnungsabschnitt abzudecken, und das genannte Dichtungselement einen Schichtstoff eines Gasbarriereelements umfasst, das mit biologisch abbaubaren Harz beschichtet ist.

10. Behälter mit Deckel nach spruch 9, das genannte biologisch abbaubare Harz eine Polymilchsäure ist.

## Revendications

1. Capsule à propriété biodégradable comprenant une coquille de capsule comportant un panneau supérieur et une partie de jupe, et un élément de doublure appliqué sur la surface interne du panneau supérieur de la coquille de capsule, la coquille de capsule étant réalisée en une composition de résines d'une résine de polyester aliphatique dure (A) et d'une résine de polyester aliphatique molle (B) qui sont mélangées selon un rapport de poids A:B = 20:80 à 80:20, **caractérisé en ce que** l'élément de doublure (i) comprend un stratifié d'un élément de base d'une couche de résine d'une résine de polyester aliphatique molle positionné sur la surface interne du panneau supérieur de la coquille de capsule et d'une couche de surface d'une résine de polyester aliphatique dure sur la surface qui vient en contact avec la partie d'embouchure du contenant, ou (ii) comprend une composition de résines d'une résine d'acide polylactique (C) et d'une résine de polybutylène téréphtalate adipate (D) mélangées selon un rapport de poids C:D = 60:40.

2. Capsule selon la revendication 1, dans laquelle ladite résine de polyester aliphatique dure (A) est un acide polylactique.

3. Capsule selon la revendication 1 ou la revendication 2, dans laquelle ladite résine de polyester aliphatique molle (B) est un succinate de polybutylène.

4. Capsule selon l'une quelconque des revendications précédentes, dans laquelle ledit élément de doublure comprend un matériau alvéolaire d'une résine biodégradable.

5. Capsule selon l'une quelconque des revendications précédentes, dans laquelle ledit élément de doublure comporte une couche de résine biodégradable faisant office de barrière aux gaz.

6. Capsule selon l'une quelconque des revendications précédentes, dans laquelle ledit élément de doublure comporte une bague interne.

7. Capsule selon l'une quelconque des revendications précédentes, dans laquelle une bande anti-fraude est formée au niveau de l'extrémité inférieure de ladite coquille de capsule.

8. Contenant à capsule, dans lequel la capsule selon l'une quelconque des revendications précédentes est appliquée sur un contenant réalisé en une résine de polyester biodégradable dure.

9. Contenant à capsule selon la revendication 8, ledit contenant étant thermoscellé avec un élément scellant biodégradable de manière à couvrir la partie d'ouverture, et ledit élément scellant comprenant un stratifié d'un élément faisant office de barrière aux gaz revêtu d'une résine biodégradable.

10. Contenant à capsule selon la revendication 9, dans lequel ladite résine biodégradable est un acide polylactique.
